# EUROPEAN PATENT APPLICATION

(11) **EP 3 667 060 A1**
(43) Date of publication of application: **17.06.2020**
(21) Application number: 18212392.7
(22) Date of filing: 13.12.2018
(51) Int. Cl.: F03D 1/06, F03D 80/40

(54) **BLADE FOR A WIND TURBINE, WIND TURBINE AND METHOD OF PREVENTING ICING OF THE BLADE**

(71) Applicant: Siemens Gamesa Renewable Energy A/S, 7330 Brande (DK)
(72) Inventor: Egedal, Per, 7400 Herning (DK); Hoegh, Gustav, 7100 Vejle (DK); Jensen, Dennis Stachniuk, DK / 7330 Brande (DK)
(74) Representative: Aspacher, Karl-Georg

(57) **Abstract**

The present invention is related to a blade (6) for a wind turbine (1), the blade (6) comprising a joint section configured to connect the blade (6) to a hub (4) of the wind turbine (1); an active add-on member (17) which is actuated by a corresponding trim actuator to alter aerodynamic properties of the blade (6); and a channel (10) configured to supply a medium from the joint section to the active add-on member (17). The present is also related to a wind turbine and a method of preventing icing of the blade.

## Description

### Field of invention

The present invention relates to a blade for a wind turbine, a wind turbine and a method of preventing icing of the blade. A conventional blade for a wind turbine comprises a joint section configured to connect the blade to a hub of the wind turbine and an active add-on member which is actuated by a corresponding trim actuator to alter aerodynamic properties of the blade. Under cold climate conditions, there is a danger that the active add-on member might freeze and get stuck, and the active add-on member will lose its primary function.

Conventionally, if the active add-on member is stuck in an open or frozen position, the wind turbine will then enter a safe mode with reduced power generation as a consequence.

### Summary of the Invention

There may be a need for a blade for a wind turbine and a wind turbine which can prevent the blade from icing. This need may be met by the subject matters according to the independent claims. The present invention is further developed as set forth in the dependent claims.

According to a first aspect of the invention, a blade for a wind turbine comprises a joint section configured to connect the blade to a hub of the wind turbine; an active add-on member which is actuated by a corresponding trim actuator to alter aerodynamic properties of the blade; and a channel configured to supply a medium from the joint section to the active add-on member.

Advantageously, the blade is provided with anti-icing means. The channel provides the medium such as heated air to the active add-on member to prevent the active add-on member from icing. The medium can constantly flow. The flow is preferably low to avoid a too high pressure in situations where the active add-on member is to be closed. This will keep the active add-on member ice free for as long as possible. The blade enables limiting or controlling the icing on the blade, thereby ensuring that the active add-on member keeps operating as designed and maintains the designed turbine load.

Preferably, the channel comprises a hose or a pipe arranged within the blade.

Preferably, the channel comprises a first channel section extending from the joint section substantially along a longitudinal direction of the blade and a second channel section extending from the first channel section towards the active add-on member.

According to a second aspect of the invention, a wind turbine comprises a tower and a rotor, the rotor being mounted at the top of the tower to rotate about a rotational axis, wherein the rotor has the hub and a plurality of the above described blades. Each blade is connected to the hub via the joint section.

However, there may occur a case where the icing become increasingly severe and the (hot) medium is insufficient to maintain the active add-on member ice free.

Preferably, the wind turbine further comprises for such a case a first de-icing device configured to detect a first icing condition of the active add-on member, wherein the first de-icing device makes the trim actuator to actuate the active add-on member, if the first de-icing device detects the first icing condition of the active add-on member. More preferred, the first icing condition is detected when a temperature of the blade or an environment thereof is lower than a predetermined temperature.

Advantageously, the forced movement (opening/closing) of the active add-on member can prevent the same from getting frozen, much like pitch motion. This effect could also have a benefit in shedding ice from Vortex Generators (VG's) as the flow there around is changed every time the active add-on member is opened/closed.

However, there may occur another case where the active add-on members do not appropriately respond to the trim actuator if they are completely frozen.

Preferably, the wind turbine further comprises for such a case a second de-icing device configured to detect a second icing condition of the active add-on member; and a pitch actuator configured to change a pitch angle of the blade, wherein the pitch angle is measured about a longitudinal axis of the blade. The second de-icing device makes the pitch actuator to change the pitch angle of the blade, if the second de-icing device detects the second icing condition of the active add-on member. Preferably, the second icing condition is detected when an actual movement of the active add-on member does not correspond to a target movement of the active add-on member as determined by the trim actuator.

A turbine of the wind turbine can then slow down and increase the pitch angle to change the flow around the blade to shed ice from the active add-on members, followed by stopping the turbine and pitching the blades perpendicular to the wind so that potentially ice can be shed this way. This strategy can include any pitch angle between an operation angle and stop angle to attempt shedding the ice. When active add-on members start responding normally, the operation can be restored. Alternatively, should it be detected that the active add-on members are completely frozen and no pitching will shed the ice to restore the normal function, the turbine can be operated without operating the active add-on members.

According to a third aspect of the invention, a method of preventing icing of a blade of a wind turbine is provided. The wind turbine comprising a tower and a rotor, the rotor being mounted at the top of the tower to rotate about a rotational axis, wherein the rotor has the hub and a plurality of blades, wherein each blade comprising a joint section configured to connect the blade to the hub of the wind turbine; an active add-on member which is actuated by a corresponding trim actuator to alter aerodynamic properties of the blade; and a channel configured to supply a medium from the joint section to the active add-on member. The method comprises a step of guiding the medium through the channel from the joint section to the active add-on member.

Preferably, the method further comprises a first de-icing step to detect a first icing condition of the active add-on member; wherein the first de-icing step makes the trim actuator to actuate the active add-on member, if the first de-icing step detects the first icing condition of the active add-on member. More preferred, the first icing condition is detected when a temperature of the blade or an environment thereof is lower than a predetermined temperature.

Preferably, the method further comprises a second de-icing step to detect a second icing condition of the active add-on member; and a pitch actuator configured to change a pitch angle of the blade, wherein the pitch angle is measured about a longitudinal axis of the blade; wherein the second de-icing step makes the pitch actuator to change the pitch angle of the blade, if the second de-icing step detects the second icing condition of the active add-on member. More preferred, the second icing condition is detected when an actual movement of the active add-on member does not correspond to a target movement of the active add-on member as determined by the trim actuator.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and different elements thereof;
- Fig. 2: shows a wind turbine blade having an add-on member; and
- Fig. 3: shows the same add-on member in an activated position, where the add-on member is turned to maximum stalling effect.

### Detailed Description

The illustrations in the drawings are schematically. It is noted that in different figures, similar or identical elements are provided with the same reference signs.

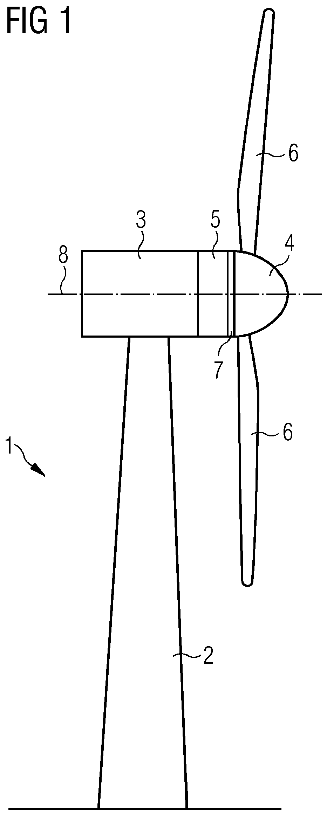

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The blades are connected to the hub 4 via a joint section (not shown). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor 10 connecting the generator 5 with the hub 4. The hub 4 is connected directly to the generator 5, thus the wind turbine 1 is referred to as a gearless, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

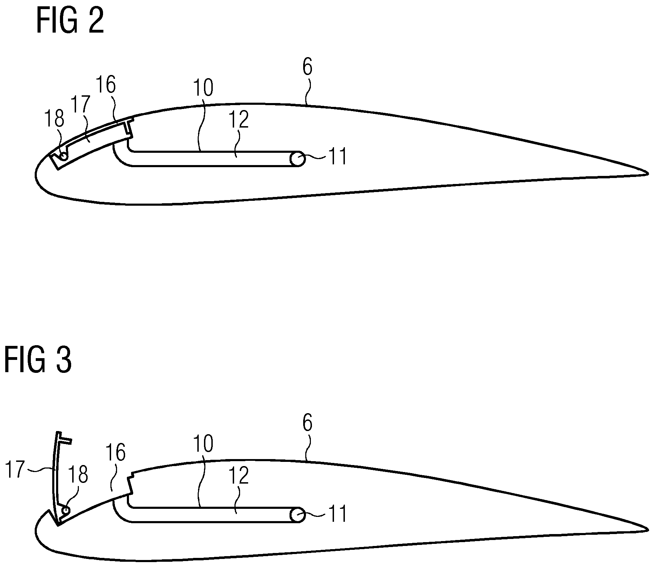

**Fig. 2** shows a wind turbine blade 6 of the wind turbine 1. Each blade 6 has an active add-on member 17 which is actuated by an actuator to alter aerodynamic properties of the blade 6.

The add-on member 17 is designed as a spoiler. The spoiler 17 is here arranged near the front edge of the blade 6, but can also be arranged near the back edge of the blade 6. The add-on member 17 is accommodated in a recess 16 in the blade 6 and can turn about a hinge 18 by activation of the actuator. In Fig. 2, the spoiler 17 is shown in its normal deactivated position, where no spoiler effect and no stall is desired.

**Fig. 3** shows the same add-on member 17 in an activated position, where the add-on member 17 is turned to a maximum by the actuator so that the stalling effect is maximum.

According to the present invention, the add-on member 17 is not necessarily to be formed as a spoiler. The add-on member 17 can have any other configuration which is able to alter the aerodynamic properties of the blade 6.

The blades 6 further comprise a channel 10 configured to supply a medium from the joint section to the active add-on member 17. The medium can be air. The air can be heated by a heater (not shown) and pumped by a pump (not shown) into the channel 10 under a predetermined pressure. The medium can constantly be supplied to the active add-on member 17, or the medium can be supplied to the active add-on member 17 when a temperature of the blade 6 or an environment thereof is lower than a predetermined temperature. The heater and the pump can be incorporated in the nacelle 3 or the tower 2.

The channel 10 can be formed as a flexible hose or as a rigid pipe arranged within the blade 6. The channel 10 comprises a first channel section 11 extending from the joint section substantially along a longitudinal direction of the blade 6, and a second channel section 12 extending from the first channel section 11 towards the active add-on member 17.

The wind turbine 1 further comprises a first de-icing device configured to detect a first icing condition of the active add-on member 17, wherein the first de-icing device makes the trim actuator to actuate the active add-on member 17, if the first de-icing device detects the first icing condition of the active add-on member 17. If the first icing condition is detected, the active add-on member 17 can constantly be actuated. The first icing condition can be detected when a temperature of the blade 6 or an environment thereof is lower than a predetermined temperature. The first de-icing device can be formed by a temperature sensor which is connected to a controller of the trim actuator.

The wind turbine 1 further comprises a second de-icing device configured to detect a second icing condition of the active add-on member 17, and a pitch actuator configured to change a pitch angle of the blade 6, wherein the pitch angle is measured about a longitudinal axis of the blade 6. The second de-icing device makes the pitch actuator to change the pitch angle of the blade 6, if the second de-icing device detects the second icing condition of the active add-on member 17. The second icing condition can be detected when an actual movement of the active add-on member 17 does not correspond to a target movement of the active add-on member 17 as determined by the trim actuator. Alternatively, the first and second icing conditions can be identical.

In detail, the actual movement of the active add-on member 17, which can be detected by a movement sensor, can be compared with a target movement of the active add-on member 17. If a difference between the actual movement and the target movement of the active add-on member 17 exceeds a predetermined value, the second icing condition can be detected. The second de-icing device can be formed by the movement sensor which is connected to a controller of the pitch actuator.

It should be noted that the term "comprising" does not exclude other elements or steps and "a" or "an" does not exelude a plurality. Also elements described in association with different embodiments may be combined. It should also be noted that reference signs in the claims should not be construed as limiting the scope of the claims.

## Claims

1. A blade (6) for a wind turbine (1), comprising:
a joint section configured to connect the blade (6) to a hub (4) of the wind turbine (1);
an active add-on member (17) which is actuated by a corresponding trim actuator to alter aerodynamic properties of the blade (6); and
a channel (10) configured to supply a medium from the joint section to the active add-on member (17).

2. The blade (6) according to the preceding claim,
wherein the channel (10) comprises a hose arranged within the blade (6).

3. The blade (6) according to any one of the preceding claims,
wherein the channel (10) comprises a pipe arranged within the blade (6).

4. The blade (6) according to any one of the preceding claims,
wherein the channel (10) comprises a first channel section (11) extending from the joint section substantially along a longitudinal direction of the blade (6) and a second channel section (12) extending from the first channel section (11) towards the active add-on member (17).

5. A wind turbine (1) comprising a tower (2) and a rotor, the rotor being mounted at the top of the tower (2) to rotate about a rotational axis (8), wherein the rotor has the hub (4) and a plurality of blades (6) according to any one of the preceding claims, wherein each blade (6) is connected to the hub (4) via the joint section.

6. The wind turbine (1) according to the preceding claim,
further comprising a first de-icing device configured to detect a first icing condition of the active add-on member (17); wherein
the first de-icing device makes the trim actuator to actuate the active add-on member (17), if the first de-icing device detects the first icing condition of the active add-on member (17).

7. The wind turbine (1) according to the preceding claim,
wherein the first icing condition is detected when a temperature of the blade (6) or an environment thereof is lower than a predetermined temperature.

8. The wind turbine (1) according to any one of the preceding claims 5 to 7,
further comprising a second de-icing device configured to detect a second icing condition of the active add-on member (17); and
a pitch actuator configured to change a pitch angle of the blade (6), wherein the pitch angle is measured about a longitudinal axis of the blade (6); wherein
the second de-icing device makes the pitch actuator to change the pitch angle of the blade (6), if the second de-icing device detects the second icing condition of the active add-on member (17).

9. The wind turbine (1) according to the preceding claim,
wherein the second icing condition is detected when an actual movement of the active add-on member (17) does not correspond to a target movement of the active add-on member (17) as determined by the trim actuator.

10. A method of preventing icing of a blade (6) of a wind turbine (1), the wind turbine (1) comprising a tower (2) and a rotor, the rotor being mounted at the top of the tower (2) to rotate about a rotational axis (8), wherein the rotor has the hub (4) and a plurality of blades (6), wherein each blade (6) comprising a joint section configured to connect the blade (6) to the hub (4) of the wind turbine (1); an active add-on member (17) which is actuated by a corresponding trim actuator to alter aerodynamic properties of the blade (6); and a channel (10) configured to supply a medium from the joint section to the active add-on member (17), wherein the method comprises a step of guiding the medium through the channel (10) from the joint section to the active add-on member (17).

11. The method according to the preceding claim, further comprising:
a first de-icing step to detect a first icing condition of the active add-on member (17); wherein
the first de-icing step makes the trim actuator to actuate the active add-on member (17), if the first de-icing step detects the first icing condition of the active add-on member (17).

12. The method according to the preceding claim,
wherein the first icing condition is detected when a temperature of the blade (6) or an environment thereof is lower than a predetermined temperature.

13. The method according to any one of the preceding claims 10 to 12,
further comprising a second de-icing step to detect a second icing condition of the active add-on member (17); and
a pitch actuator configured to change a pitch angle of the blade (6), wherein the pitch angle is measured about a longitudinal axis of the blade (6); wherein
the second de-icing step makes the pitch actuator to change the pitch angle of the blade (6), if the second de-icing step detects the second icing condition of the active add-on member (17).

14. The method according to the preceding claim,
wherein the second icing condition is detected when an actual movement of the active add-on member (17) does not correspond to a target movement of the active add-on member (17) as determined by the trim actuator.
